# EUROPEAN PATENT APPLICATION

(11) **EP 4 456 308 A1**
(43) Date of publication of application: **30.10.2024**
(21) Application number: 22919951.8
(22) Date of filing: 30.11.2022
(51) Int. Cl.: H01M 50/50, H01M 50/543, H01M 50/209

(54) **CONNECTING COMPONENT, BATTERY CELL, BATTERY AND ELECTRIC DEVICE**

(30) Priority: 12.01.2022 CN 202220075729 U
(71) Applicant: Contemporary Amperex Technology Co., Limited, Jiaocheng District Ningde Fujian 352100 (CN)
(72) Inventor: ZHU, Wenqi, Ningde, Fujian 352100 (CN)
(74) Representative: Holt, Lucy Rose
(86) International application number: PCT/CN2022/135566
(87) International publication number: WO 2023/134318

(57) **Abstract**

The present application relates to the technical field of new energy, and particularly relates to a connecting component, a battery cell, a battery and an electric device. The connecting component is used for connecting an electrode terminal to an electrode assembly of a battery cell, and is provided with a stress release structure, which is used for releasing the stress of a place where the connecting component is soldered to the electrode terminal. In this way, the present application can solve the problem of cracking and detachment of a soldering structure between a connecting component and an electrode terminal, thus improving the soldering stability.

## Description

This application claims priority to Chinese Patent Application No. 202220075729.5, filed on January 12, 2022 and entitled "CONNECTING COMPONENT, BATTERY CELL, BATTERY, AND ELECTRIC APPARATUS", which is incorporated herein by reference in its entirety.

### TECHNICAL FIELD

This application relates to the field of new energy technologies and specifically to a connecting component, a battery cell, a battery, and an electric apparatus.

### BACKGROUND

In a battery cell, an electrode assembly inside a housing is typically connected to an electrode terminal on an end cover through a connecting component, so as to transfer internal current to the electrode terminal. To ensure the stability of connection and conductivity between the connecting component and the electrode terminal, the connecting component is typically fixedly connected to the electrode terminal through welding, but detachment occurs between the connecting component and the electrode terminal after welding.

### Technical problems

In view of the foregoing problem, this application provides a connecting component, a battery cell, a battery, and an electric apparatus, so as to solve the problems of cracking and detachment in a welding structure between the connecting component and an electrode terminal, improving stability of welding.

### TECHNICAL SOLUTION

According to an aspect of this application, a connecting component is provided. The connecting component is configured to connect an electrode terminal and electrode assembly of a battery cell, where the connecting component is provided with a stress release structure, and the stress release structure is configured to release stress at a weld between the connecting component and the electrode terminal.

In some embodiments, the connecting component includes a first connecting portion configured to be connected to the electrode terminal and a second connecting portion configured to be connected to the electrode assembly, and the stress release structure is disposed on the first connecting portion. The connecting component is arranged as the first connecting portion and the second connecting portion to achieve connections of the connecting component with the electrode terminal and the electrode assembly, and the stress release structure is disposed on the first connecting portion to ensure stability of the welding structure between the first connecting portion and the electrode terminal.

In some embodiments, the stress release structure includes a groove. The groove provided allows a welding region on the first connecting portion to smoothly contract into the groove during welding when the first connecting portion is welded to the electrode terminal, so as to release the welding stress, thereby ensuring the stability of the welding structure between the first connecting portion and the electrode terminal.

In some embodiments, the groove is provided in plurality and is strip-shaped. The groove is provided in plurality and is strip-shaped, such that the groove can cover the welding region on the first connecting portion more comprehensively, and the stress generated in the welding region during welding can be more sufficiently released via the plurality of strip-shaped grooves, thereby further improving the stability of the welding structure.

In some embodiments, the plurality of grooves communicate with each other. The plurality of grooves communicate with each other, such that the plurality of grooves divide the welding region on the first connecting portion into a plurality of portions, and in turn when the welding region contracts inward during welding, the plurality of portions under the contraction force can deform and get close to each other at the grooves, so as to further release the welding stress, thereby ensuring the stability of the welding structure between the first connecting portion and the electrode terminal.

In some embodiments, the plurality of grooves have one end intersecting at the center of the first connecting portion. For welding in a spiral or annular shape from the outer ring to the outer ring, more welding stress concentrates at the center of the first connecting portion. The plurality of grooves have one end intersecting at the center of the first connecting portion, such that the welding stress causing contraction of the welding region on the first connecting portion and concentrating at the center can be sufficiently released, so as to ensure the stability of the welding structure.

In some embodiments, the first connecting portion is provided with a through hole at the intersection. The first connecting portion is provided with the through hole at the intersection, such that metal shavings generated during processing of the grooves fall out of the through hole, thereby preventing the metal shavings from falling and accumulating in the grooves which otherwise affects subsequent welding. In addition, the first connecting portion is provided with the through hole at the intersection, such that the first connecting portion can smoothly contract inward at the through hole to deform during welding, thereby smoothly releasing the welding stress concentrating at the center via the through hole.

In some embodiments, a ratio of depth of the groove to thickness of the first connecting portion is greater than or equal to 0.7. The ratio of the depth of the groove to the thickness of the first connecting portion being set to be greater than or equal to 0.7 facilitates smooth deformation and contraction of the first connecting portion at the groove during welding, so as to further release the welding stress at the groove, thereby ensuring the stability and reliability of the welding structure between the first connecting portion and the electrode terminal.

In some embodiments, width of the groove is w, where 0 mm < w ≤ 0.3 mm. The width w of the groove being set within the range of greater than 0 mm and less than or equal to 0.3 mm can not only ensure reliable structural strength of the first connecting portion but also achieve effective release of the welding stress when the first connecting portion is welded to the electrode terminal.

In some embodiments, the groove runs through the first connecting portion. In the process of welding the first connecting portion to the electrode terminal, because the groove runs through the first connecting portion, the first connecting portion forms a free end at an inner wall of the groove, and in turn the first connecting portion around the groove can quickly and smoothly contract into the groove to deform during welding, resulting in accordingly decreased width of the groove, thereby quickly and effectively releasing the welding stress. In addition, with the groove running through the first connecting portion, a molten pool generated during welding can be stably fused with a side wall of the groove and an outer wall of the electrode terminal during subsequent curing after entering the groove, so as to sufficiently improve the stability of the welding structure between the first connecting portion and the electrode terminal.

In some embodiments, the second connecting portion is sheet-shaped, and the first connecting portion includes a protrusion provided on a side of the second connecting portion, where the protrusion is configured to be connected to the electrode terminal, the second connecting portion and the first connecting portion are an integral structure, a recess is formed on a side of the second connecting portion away from the first connecting portion by forming the protrusion, the protrusion includes a top wall and a side wall, the side wall connects the top wall and the second connecting portion, and the stress release structure is disposed on the top wall. The first connecting portion being arranged as the protrusion helps to align and abut the welding regions on the first connecting portion and the electrode terminal during welding. Because the top wall of the protrusion is the welding region, the welding position on the connecting component can be quickly determined. With the recess formed on the side of the second connecting portion away from the first connecting portion, the welding track is easily controlled within the recess, thereby avoiding damage to structures outside the welding region due to inability to accurately determine the boundary of the welding region. In addition, if thickness of the welding region on the connecting component is excessively large, it is possible that the welding region cannot be welded through, resulting in welding failure. Therefore, the recess being formed on the side of the second connecting portion away from the first connecting portion and corresponding to the protrusion can ensure the thickness at the top wall, thereby ensuring that the connecting component can be fixed to the electrode terminal through welding.

In some embodiments, the stress release structure and the side wall are apart from each other. In the battery cell, the stress release structure and the side wall are apart from each other, so as to prevent welding plasma from reaching the side wall via the stress release structure which otherwise causes burns or scalds to an insulating material around the side wall.

According to another aspect of this application, a battery cell is provided, including an electrode terminal, an electrode assembly, and the connecting component according to any one of the foregoing embodiments, where the connecting component connects the electrode terminal and the electrode assembly. A stress release structure is provided on the connecting component, such that when the connecting component is welded to the electrode terminal during assembly of the battery cell, welding stress generated on the connecting component can be released at the stress release structure, thereby ensuring stability of the welding structure between the connecting component and the electrode terminal, preventing stress cracks or detachment from occurring after the connecting component is welded to the electrode terminal which otherwise affects quality of the battery cell.

According to another aspect of this application, a battery is provided, including a plurality of battery cells as described above.

According to another aspect of this application, an electric apparatus is provided, including a plurality of battery cells as described above.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### Beneficial effects

The stress release structure is provided on the connecting component, such that when the connecting component is welded to the electrode terminal, the welding region on the connecting component can smoothly contract inward to deform during welding, so as to release the welding stress, thereby ensuring the stability of the welding structure between the connecting component and the electrode terminal, preventing the stress cracks or detachment from occurring after the connecting component is welded to the electrode terminal which otherwise affects the quality of the battery cell.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments and should not be construed as any limitation on this application. Throughout the accompanying drawings, the same reference signs represent the same components. In the accompanying drawings:
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural diagram of a connecting component from one perspective according to an embodiment of this application;
FIG. 5 is a schematic structural diagram of a connecting component from another perspective according to an embodiment of this application;
FIG. 6 is a schematic structural cross-sectional view of a connecting component at an annular wavy structure according to another embodiment of this application;
FIG. 7 is a schematic structural top view of a connecting component according to an embodiment of this application;
FIG. 8 is a schematic structural cross-sectional view of a connecting component at a groove according to an embodiment of this application;
FIG. 9 is a schematic structural cross-sectional view of a connecting component at a groove according to another embodiment of this application;
FIG. 10 is a schematic structural cross-sectional view of a connecting component assembled on a battery cell according to an embodiment of this application;
FIG. 11 is a schematic structural exploded view of a battery cell according to another embodiment of this application;
FIG. 12a is a schematic structural top view of a connecting component with a weld mark formed according to an embodiment of this application;
FIG. 12b is a schematic structural top view of a connecting component with a weld mark formed according to another embodiment of this application; and
FIG. 12c is a schematic structural top view of a connecting component with a weld mark formed according to still another embodiment of this application.

Reference signs in the specific embodiments are described as follows:
vehicle 1000;
battery 100; controller 200; motor 300;
box 10; first portion 11; second portion 12;
battery cell 20; end cover 21; electrode lead-out hole 211; electrode terminal 21a; housing 22; electrode assembly 23; tab 23a; sealing ring 24;
connecting component 500; stress release structure 510; groove 511; annular wavy structure 512; first connecting portion 520; through hole 521; protrusion 522; top wall 5221; side wall 5222; recess 523; and second connecting portion 530.

### DESCRIPTION OF EMBODIMENTS OF THE PRESENT INVENTION

The following describes in detail the embodiments of technical solutions of this application with reference to the accompanying drawings. The following embodiments are merely used to describe the technical solutions in this application more clearly, and therefore are merely used as examples and do not constitute any limitation on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of the descriptions of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of the market development, batteries have been increasingly widely used. Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of batteries, market demands for the batteries are also increasing.

To improve the quality of battery cells so that the battery cells have a stable and reliable current channel, it is necessary to ensure that an electrode assembly and an electrode terminal in a battery cell have a good electrical connection structure.

In an existing battery cell, the electrode assembly and the electrode terminal are connected to each other through a connecting component, so as to form an electrical connection structure. The connecting component is typically sheet-shaped, with one portion connected to the electrode assembly and the other portion connected to the electrode terminal. To ensure a stable connection structure between the connecting component and the electrode terminal, the connecting component is typically connected to the electrode terminal through welding to form a current channel.

During welding, welding stress is generated due to contraction at a weld j oint. Specifically, internal stress caused by welding in the welded workpiece is referred to as welding stress. Based on the period when the welding stress is generated, the welding stress can be categorized into transient welding stress and residual welding stress. The transient welding stress is stress that varies with temperature during welding; and the residual welding stress is stress that remains after the welded workpiece cools to the initial temperature. Based on the orientation of the welding stress in the welded workpiece, the welding stress can be categorized into longitudinal stress, transverse stress, and thickness stress. Actually, the welding stress is three-dimensional stress. However, for a thin plate, the thickness stress is relatively small and therefore can be treated as two-dimensional stress.

The inventor of this application has noticed that detachment occurs between the connecting component and the electrode terminal after the connecting component is welded to the electrode terminal. It is found through research that because a large welding stress is generated when the connecting component is welded to the electrode terminal, stress cracks easily occur at the weld between the connecting component and the electrode terminal. When the welding stress is excessively large, detachment may occur between the connecting component and the electrode terminal, resulting in short circuit, preventing the normal operation of the battery cell.

In view of this, this application proposes a connecting component. A stress release structure is provided on the connecting component, for example, a groove is provided in a welding region on the connecting component or an annular wavy structure is provided on the periphery of the welding region, such that when the connecting component is welded to the electrode terminal, the welding region on the connecting component can contract into the groove to deform during welding, so as to release the welding stress, or the annular wavy structure on the periphery of the welding region on the connecting component can deform to extend inward, so as to release the welding stress, thereby ensuring stability of the welding structure between the connecting component and the electrode terminal.

The battery disclosed in the embodiments of this application may be used without limitation in electric apparatuses such as vehicles, ships, or aircrafts.

An embodiment of this application provides an electric apparatus that uses a battery as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

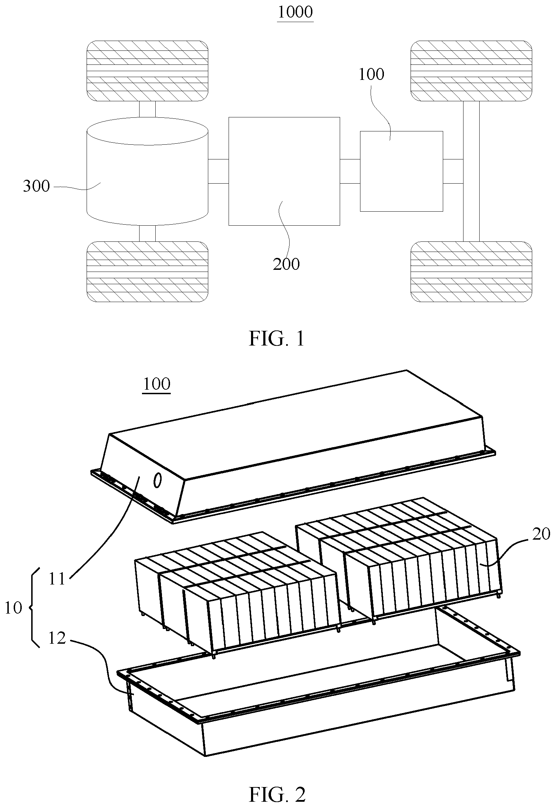

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithiumsulfur battery, a sodium-ion battery, or a magnesium-ion battery, without being limited thereto. The battery cell 20 may be cylindrical, flat, cuboid, or of other shapes.

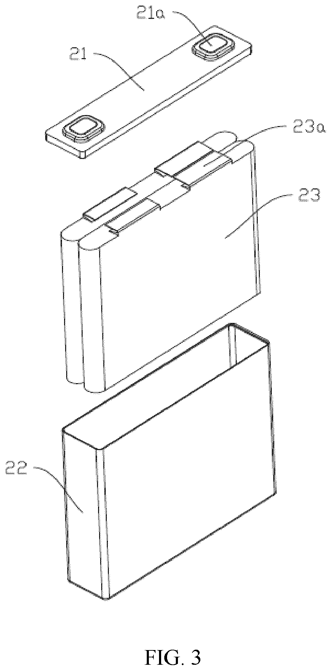

Referring to FIG. 3, FIG. 3 is a schematic structural exploded view of a battery cell 20 in a battery 100 according to some embodiments of this application. The battery cell 20 is a smallest unit constituting a battery. As shown in FIG. 3, the battery cell 20 includes an end cover 21, a housing 22, an electrode assembly 23, and other functional components.

The end cover 21 is a component that covers an opening of the housing 22 to isolate an internal environment of the battery cell 20 from an external environment. Without limitation, the shape of the end cover 21 may be adapted to the shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. Functional components such as an electrode terminal 21a may be provided on the end cover 21. The electrode terminal 21a may be configured to be electrically connected to the electrode assembly 23 for outputting or inputting electric energy of the battery cell 20. In some embodiments, the end cover 21 may be further provided with a pressure relief mechanism for releasing internal pressure when the internal pressure or temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided on an inner side of the end cover 21. The insulator may be configured to insulate an electrical connection component in the housing 22 from the end cover 21 to reduce the risk of short circuit. For example, the insulator may be made of plastic, rubber, or the like.

The housing 22 is an assembly configured to form an internal environment of the battery cell 20 by fitting with the end cover 21, where the formed internal environment may be used to accommodate the electrode assembly 23, an electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may alternatively be integrated. The housing 22 may be of various shapes and sizes, such as a cuboid shape, a cylindrical shape, and a hexagonal prism shape. Specifically, the shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab 23a. A positive tab and a negative tab may both be located at one end of the body portion or be located at two ends of the body portion respectively. During charging and discharging of the battery, a positive electrode active substance and a negative electrode active substance react with the electrolyte, and the tabs 23a are connected to the electrode terminals to form a current loop.

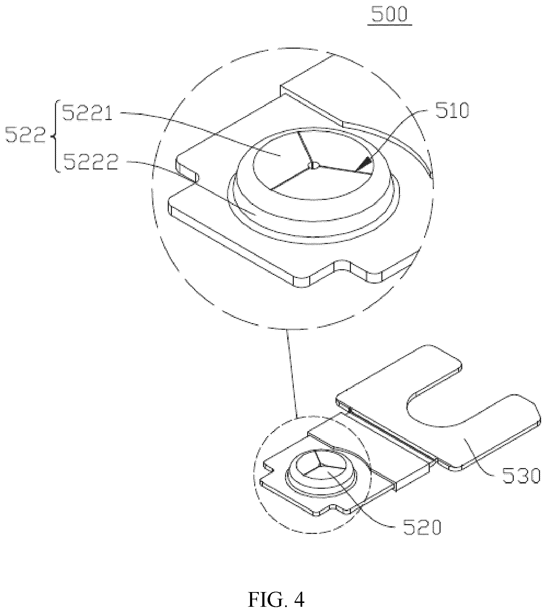

According to an aspect of the embodiments of this application, a connecting component is provided. Specifically, referring to FIG. 4, FIG. 4 shows a structure of a connecting component 500 according to an embodiment of this application. The connecting component 500 is configured to connect an electrode terminal and electrode assembly of a battery cell. The connecting component 500 is provided with a stress release structure 510, and the stress release structure 510 is configured to release stress at a weld between the connecting component 500 and the electrode terminal.

The connecting component 500 may be a sheet-shaped structure as shown in the figure, so as to reduce the space occupied and increase energy density inside the battery cell. The connecting component 500 is generally made of a metal material with good electrical conductivity, so as to ensure stability of current transfer between the electrode assembly and the electrode terminal. It can be understood that the connecting component 500 may alternatively be a curved sheet-shaped structure or block-shaped structure, which is not limited herein.

The stress release structure 510 may be, for example, a groove or an annular wavy structure. During welding, the stress release structure 510 provides a space for the connecting component 500 to contract inward to deform, so as to release the welding stress, thereby ensuring stability and reliability of the welding structure between the connecting component 500 and the electrode terminal.

The stress release structure 510 is provided on the connecting component 500, such that when the connecting component 500 is welded to the electrode terminal, a welding region on the connecting component 500 can smoothly contract inward to deform during welding, so as to release the welding stress, thereby ensuring the stability of the welding structure between the connecting component 500 and the electrode terminal, preventing stress cracks or detachment from occurring after the connecting component 500 is welded to the electrode terminal which otherwise affects quality of the battery cell.

Still referring to FIG. 4, according to some embodiments of this application, the connecting component 500 includes a first connecting portion 520 configured to be connected to the electrode terminal and a second connecting portion 530 configured to be connected to the electrode assembly, and the stress release structure 510 is disposed on the first connecting portion 520.

Specifically, the first connecting portion 520 and the second connecting portion 530 may be an integrally formed structure, so as to ensure the stability of current transfer. Certainly, the first connecting portion 520 and the second connecting portion 530 may alternatively be two portions fixedly connected to each other, so as to facilitate mold making and production.

A boss may be provided on the first connecting portion 520 for optimizing the welding structure and determining the welding region. Welding a top wall of the boss to the electrode terminal can ensure not only the stability of the structure after welding but also the accuracy of the positioning of the welding region, avoiding welding position offset. The second connecting portion 530 is configured to be connected to a tab on the internal electrode assembly, so as to form a current channel between the electrode assembly and the electrode terminal.

The connecting component 500 is arranged as the first connecting portion 520 and the second connecting portion 530 to achieve connections of the connecting component 500 with the electrode terminal and the electrode assembly, and the stress release structure 510 is disposed on the first connecting portion 520 to ensure the stability of the welding structure between the first connecting portion 520 and the electrode terminal.

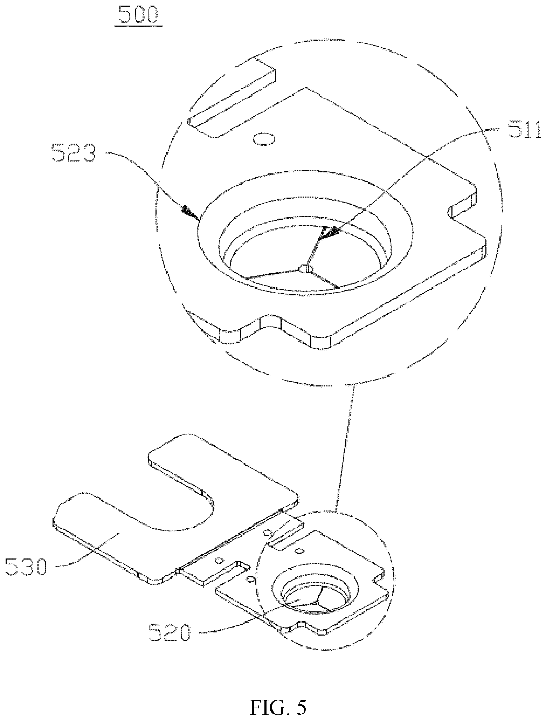

Still referring to FIG. 4 and with further reference to FIG. 5, FIG. 5 shows a structure of the connecting component 500 from the bottom perspective according to an embodiment of this application. According to some embodiments of this application, the stress release structure 510 includes a groove 511.

Specifically, the groove 511 may be provided on a top surface of the first connecting portion 520 as shown in FIG. 4, or on a bottom surface of the first connecting portion 520 as shown in FIG. 5, or certainly on both a top surface and bottom surface of the first connecting portion 520, such that the welding region on the first connecting portion 520 can smoothly contract into the groove during welding, so as to release the stress generated during welding via the groove 511.

The groove 511 provided allows the welding region on the first connecting portion 520 to smoothly contract into the groove during welding when the first connecting portion 520 is welded to the electrode terminal, so as to release the welding stress, thereby ensuring the stability of the welding structure between the first connecting portion 520 and the electrode terminal.

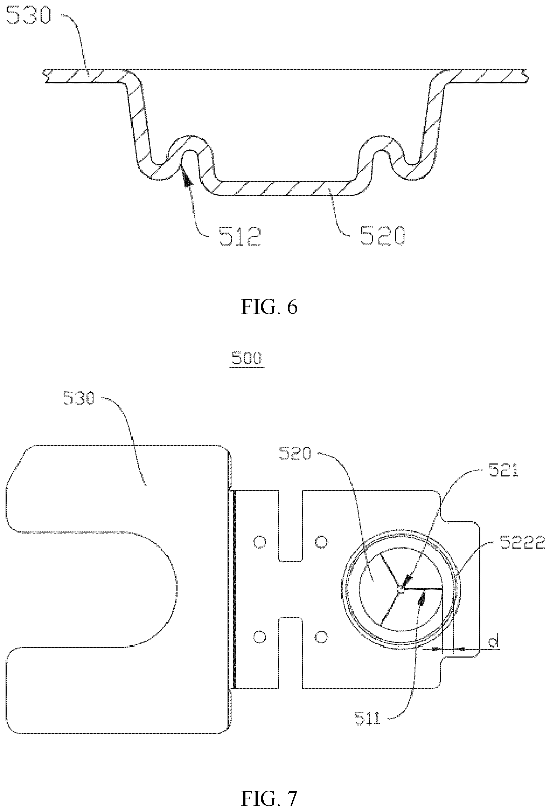

Referring to FIG. 6, FIG. 6 shows a cross-sectional structure of an annular wavy structure 512 in the connecting component 500 according to another embodiment of this application. According to some embodiments of this application, the stress release structure 510 further includes the annular wavy structure 512.

Similarly, with the annular wavy structure 512 provided, when the first connecting portion 520 is welded to the electrode terminal, the annular wavy structure 512 deforms inward accordingly under the inward contraction force of the welding region on the first connecting portion 520, such that the welding region on the first connecting portion 520 can smoothly contract inward, ensuring the stability of the welding structure between the first connecting portion 520 and the electrode terminal.

Still referring to FIG. 5, according to some embodiments of this application, the groove 511 is provided in plurality and is strip-shaped.

As shown in FIG. 5, the groove 511 may be provided in three, and the three grooves 511 all extend from the center of the welding region toward the edge. It can be understood that in some other embodiments, the groove 511 may alternatively be provided in two or more, and the groove 511 may be a strip-shaped straight line, curve, or ring, provided that the welding stress can be released. The specific quantity and shape of the groove 511 are not limited herein.

The groove 511 is provided in plurality and is strip-shaped, such that the groove 511 can cover the welding region on the first connecting portion 520 more comprehensively, and the stress generated in the welding region during welding can be more sufficiently released via the plurality of strip-shaped grooves 511, thereby further improving the stability of the welding structure.

Still referring to FIG. 5, according to some embodiments of this application, the plurality of grooves 511 communicate with each other.

Specifically, the plurality of grooves 511 may intersect and communicate at one end as shown in FIG. 5, or certainly may cross and communicate with each other.

The plurality of grooves 511 communicate with each other, such that the plurality of grooves 511 divide the welding region on the first connecting portion 520 into a plurality of portions, and in turn when the welding region contracts inward during welding, the plurality of portions under the contraction force can deform and get close to each other at the grooves 511, so as to further release the welding stress, thereby ensuring the stability of the welding structure between the first connecting portion 520 and the electrode terminal.

Referring to FIG. 7, FIG. 7 shows a top structure of the connecting component 500 according to an embodiment of this application. According to some embodiments of this application, the plurality of grooves 511 have one end intersecting at the center of the first connecting portion 520.

For welding in a spiral or annular shape from the outer ring to the outer ring, more welding stress concentrates at the center of the first connecting portion 520. The plurality of grooves 511 have one end intersecting at the center of the first connecting portion 520, such that the welding stress causing contraction of the welding region on the first connecting portion 520 and concentrating at the center can be sufficiently released, so as to ensure the stability of the welding structure.

Further, still referring to FIG. 7, according to some embodiments of this application, the first connecting portion 520 is provided with a through hole 521 at the intersection.

When the grooves 511 intersecting at the center are being processed on the first connecting portion 520, if no through hole 521 is provided, a later processed groove 511 will cut off an end corner of an earlier processed groove 511 to generate metal shavings when intersecting with the earlier processed groove 511, and the metal shavings falling and accumulating in the grooves 511 adversely affect subsequent welding, resulting in reduced stability of the welding structure.

Based on this, the first connecting portion 520 is provided with the through hole 521 at the intersection, such that the metal shavings generated during processing of the grooves 511 fall out of the through hole 521, thereby preventing the metal shavings from falling and accumulating in the grooves 511 which otherwise affects the subsequent welding. In addition, the first connecting portion 520 is provided with the through hole 521 at the intersection, such that the first connecting portion 520 can smoothly contract inward at the through hole 521 to deform during welding, thereby smoothly releasing the welding stress concentrating at the center via the through hole 521.

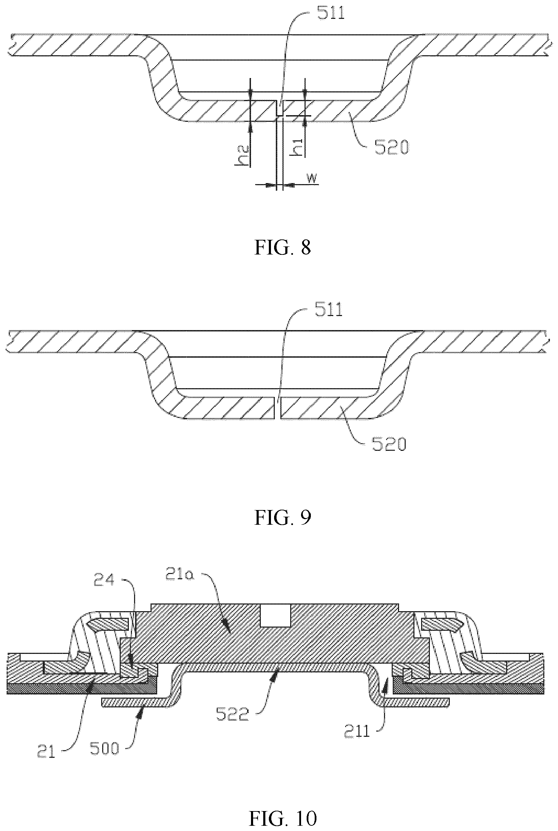

Referring to FIG. 8, FIG. 8 shows a cross-sectional structure of the connecting component 500 at the groove 511 according to an embodiment of this application. According to some embodiments of this application, a ratio of depth of the groove 511 to thickness of the first connecting portion 520 is greater than or equal to 0.7.

As shown in FIG. 8, the depth of the groove 511 is h1 and the thickness of the first connecting portion 520 is h2, where h1/h2 ≥ 0.7.

The ratio of the depth of the groove 511 to the thickness of the first connecting portion 520 being set to be greater than or equal to 0.7 facilitates smooth deformation and contraction of the first connecting portion 520 at the groove 511 during welding, so as to further release the welding stress at the groove 511, thereby ensuring the stability and reliability of the welding structure between the first connecting portion 520 and the electrode terminal.

Still referring to FIG. 8, according to some embodiments of this application, width of the groove 511 is w, where 0 mm < w ≤ 0.3 mm.

Provision of the groove 511 on the first connecting portion 520 reduces structural strength of the first connecting portion 520. To prevent a great impact on the structural strength of the first connecting portion 520 while releasing the welding stress, the inventor of this application has learned through tests and measurements that the width w of the groove 511 being set within the range of greater than 0 mm and less than or equal to 0.3 mm can not only ensure reliable structural strength of the first connecting portion 520 but also achieve effective release of the welding stress when the first connecting portion 520 is welded to the electrode terminal.

If the width w of the groove 511 is excessively large, when the welding track reaches the groove 511, the bottom wall of the groove 511 is penetrated by excessive welding due to the thin bottom wall of the groove 511, such that the electrode terminal is easily welded through due to excessively large melting depth during welding.

As shown in FIG. 8, the cross section of the groove 511 may be the rectangle shown in the figure. In some other embodiments, the cross section of the groove 511 may alternatively be set as an inverted triangle, a U shape, or the like. The specific shape of the cross section of the groove 511 is not limited herein.

Referring to FIG. 9, FIG. 9 shows a cross-sectional structure of the connecting component 500 at the groove 511 according to another embodiment of this application. According to some embodiments of this application, the groove 511 runs through the first connecting portion 520.

In the process of welding the first connecting portion 520 to the electrode terminal, because the groove 511 runs through the first connecting portion 520, the first connecting portion 520 forms a free end at an inner wall of the groove 511, and in turn the first connecting portion 520 around the groove 511 can quickly and smoothly contract into the groove 511 to deform during welding, resulting in accordingly decreased width of the groove 511, thereby quickly and effectively releasing the welding stress. In addition, with the groove 511 running through the first connecting portion 520, a molten pool generated during welding can be stably fused with a side wall of the groove 511 and an outer wall of the electrode terminal during subsequent curing after entering the groove 511, so as to sufficiently improve the stability of the welding structure between the first connecting portion 520 and the electrode terminal.

Still referring to FIG. 4 and FIG. 5, the second connecting portion 530 is sheet-shaped, and the first connecting portion 520 includes a protrusion 522 provided on a side of the second connecting portion 530, where the protrusion 522 is configured to be connected to the electrode terminal, the second connecting portion 530 and the first connecting portion 520 are an integral structure, a recess 523 is formed on a side of the second connecting portion 530 away from the first connecting portion 520 by forming the protrusion 522, the protrusion 522 includes a top wall 5221 and a side wall 5222, the side wall 5222 connects the top wall 5221 and the second connecting portion 530, and the stress release structure 510 is disposed on the top wall 5221.

During welding, the first connecting portion 520 first abuts against the electrode terminal, then a portion of the structure of the first connecting portion 520 is welded through and melted, and the melted structure is fused with the electrode terminal during curing, so as to achieve fixed connection between the first connecting portion 520 and the electrode terminal.

The first connecting portion 520 being arranged as the protrusion 522 helps to align and abut the welding regions on the first connecting portion 520 and the electrode terminal during welding. Because the top wall 5221 of the protrusion 522 is the welding region, the welding position on the connecting component 500 can be quickly determined.

With the recess 523 formed on the side of the second connecting portion 530 away from the first connecting portion 520, the welding track is easily controlled within the recess 523, thereby avoiding damage to structures outside the welding region due to inability to accurately determine the boundary of the welding region. In addition, if thickness of the welding region on the connecting component 500 is excessively large, it is possible that the welding region cannot be welded through, resulting in welding failure. Therefore, the recess 523 being formed on the side of the second connecting portion 530 away from the first connecting portion 520 and corresponding to the protrusion 522 can ensure the thickness at the top wall 5221, thereby ensuring that the connecting component 500 can be fixed to the electrode terminal through welding.

Referring to FIG. 10, FIG. 10 shows a cross-sectional structure of the connecting component 500 assembled in the battery cell according to an embodiment of this application. As shown in the figure, the end cover 21 is provided with an electrode lead-out hole 211, the electrode terminal 21a covers the electrode lead-out hole 211, and the protrusion 552 of the connecting component 500 extends into the electrode lead-out hole 211 to be electrically connected to the electrode terminal 21a. A sealing ring 24 is provided between the electrode terminal 21a and the end cover 21, and a portion of the sealing ring 24 extends into the electrode lead-out hole 211 to enclose a hole wall of the electrode lead-out hole 211.

Referring to FIG. 4 and FIG. 7, according to some embodiments of this application, the stress release structure 510 and the side wall 5222 are apart from each other.

Specifically, as shown in FIG. 7, a distance between an edge of the stress release structure 510 (that is, an end portion of an outer end of the groove 511 in FIG. 7) and the side wall 5222 is d, where d ≥ 0, such that the stress release structure 510 and the side wall 5222 are apart from each other.

In the battery cell, the stress release structure 510 and the side wall 5222 are apart from each other, so as to prevent welding plasma from reaching the side wall 5222 via the stress release structure 510 which otherwise causes burns or scalds to an insulating material around the side wall 5222.

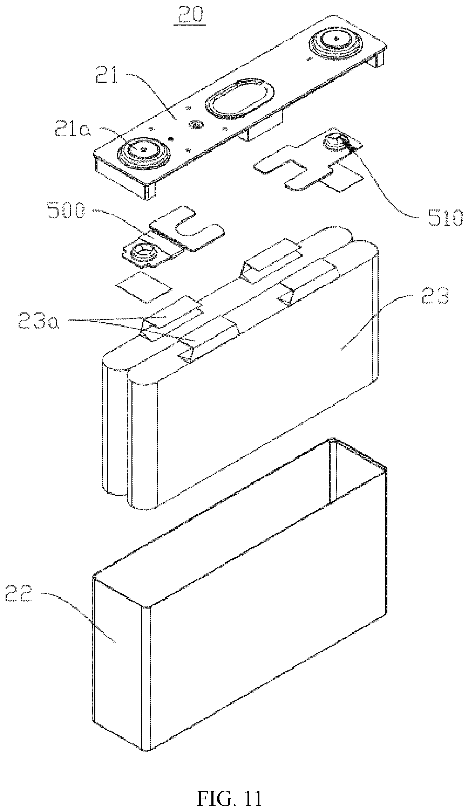

According to another aspect of the embodiments of this application, a battery cell is provided. Specifically, referring to FIG. 11, FIG. 11 shows an exploded structure of a battery cell 20 according to an embodiment of this application. The battery cell 20 includes an electrode terminal 21a, an electrode assembly 23, and the connecting component 500 according to any one of the foregoing embodiments, where the connecting component 500 connects the electrode terminal 21a and the electrode assembly 23.

As shown in FIG. 11, a region provided with a stress release structure 510 at the top of the connecting component 500 is welded to the bottom of the electrode terminal 21a, and another region of the connecting component 500 is connected to the electrode assembly 23, so as to achieve current transfer between the electrode terminal 21a and the electrode assembly 23.

The stress release structure 510 is provided on the connecting component 500, such that when the connecting component 500 is welded to the electrode terminal 21a during assembly of the battery cell 20, welding stress generated on the connecting component 500 can be released at the stress release structure 510, thereby ensuring stability of the welding structure between the connecting component 500 and the electrode terminal, preventing stress cracks or detachment from occurring after the connecting component 500 is welded to the electrode terminal which otherwise affects quality of the battery cell.

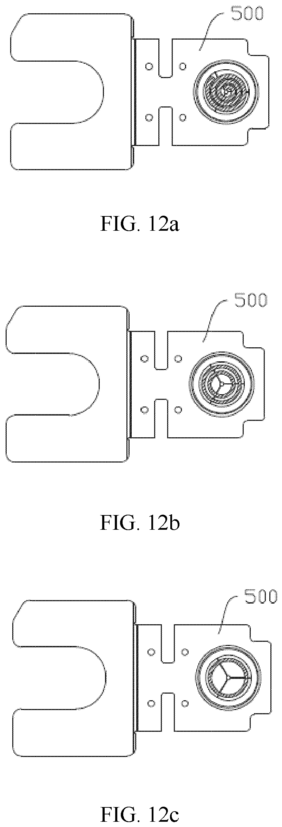

Specifically, the connecting component 500 may be welded to the electrode terminal 21a in a spiral track as shown in FIG. 12a, and after welding, the connecting component 500 smoothly contracts inward through the stress release structure, so as to release the generated welding stress. The connecting component 500 may alternatively be welded to the electrode terminal 21a in a plurality of concentric annular tracks as shown in FIG. 12b or in a single annular track as shown in FIG. 12c.

According to another aspect of the embodiments of this application, a battery is further provided, including the battery cell according to the foregoing embodiment.

The battery disclosed in the embodiments of this application may be used without limitation in electric apparatuses such as vehicles, ships, or aircrafts.

According to another aspect of the embodiments of this application, an electric apparatus is further provided, including the battery cell according to the foregoing embodiment.

An embodiment of this application provides an electric apparatus that uses a battery cell as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A connecting component, the connecting component being configured to connect an electrode terminal and electrode assembly of a battery cell, wherein the connecting component is provided with a stress release structure, and the stress release structure is configured to release stress at a weld between the connecting component and the electrode terminal.

2. The connecting component according to claim 1, wherein the connecting component comprises a first connecting portion configured to be connected to the electrode terminal and a second connecting portion configured to be connected to the electrode assembly, and the stress release structure is disposed on the first connecting portion.

3. The connecting component according to claim 2, wherein the stress release structure comprises a groove.

4. The connecting component according to claim 3, wherein the groove is provided in plurality and is strip-shaped.

5. The connecting component according to claim 4, wherein the plurality of grooves communicate with each other.

6. The connecting component according to claim 5, wherein the plurality of grooves have one end intersecting at the center of the first connecting portion.

7. The connecting component according to claim 6, wherein the first connecting portion is provided with a through hole at the intersection.

8. The connecting component according to any one of claims 3 to 7, wherein the groove is provided on a top surface of the first connecting portion; or the groove is provided on a bottom surface of the first connecting portion; or the groove is provided on both a top surface and bottom surface of the first connecting portion.

9. The connecting component according to any one of claims 3 to 8, wherein a ratio of depth of the groove to thickness of the first connecting portion is greater than or equal to 0.7.

10. The connecting component according to any one of claims 3 to 9, wherein width of the groove is w, wherein 0 mm < w ≤ 0.3 mm.

11. The connecting component according to any one of claims 3 to 10, wherein the groove runs through the first connecting portion.

12. The connecting component according to any one of claims 2 to 11, wherein
the second connecting portion is sheet-shaped, and the first connecting portion comprises a protrusion provided on a side of the second connecting portion, wherein the protrusion is configured to be connected to the electrode terminal, the second connecting portion and the first connecting portion are an integral structure, a recess is formed on a side of the second connecting portion away from the first connecting portion by forming the protrusion, the protrusion comprises a top wall and a side wall, the side wall connects the top wall and the second connecting portion, and the stress release structure is disposed on the top wall.

13. The connecting component according to claim 12, wherein the stress release structure and the side wall are apart from each other.

14. A battery cell, comprising an electrode terminal, an electrode assembly, and the connecting component according to any one of claims 1 to 13, wherein the connecting component connects the electrode terminal and the electrode assembly.

15. The battery cell according to claim 14, wherein the connecting component is welded to the electrode terminal in a spiral track.

16. A battery, comprising a plurality of battery cells according to claim 14 or 15.

17. An electric apparatus, comprising a plurality of battery cells according to claim 14 or 15.
